(19) Europäisches Patentamt
European Patent Office
Office européen des brevets

(11) Publication number: **0 481 558 A1**

(12) **EUROPEAN PATENT APPLICATION**

(21) Application number: **91202633.3**

(22) Date of filing: **10.10.91**

(51) Int. Cl.5: **C08L 77/06**, C08L 67/03, C08K 5/42, //(C08L77/02,67:03), (C08L67/03,77:02),(C08K5/42, C08L67:03,77:02)

(30) Priority: **15.10.90 NL 9002233**
**26.09.91 NL 9101624**

(43) Date of publication of application:
**22.04.92 Bulletin 92/17**

(84) Designated Contracting States:
**AT BE CH DE DK ES FR GB GR IT LI NL SE**

(71) Applicant: **DSM N.V.**
**Het Overloon 1**
**NL-6411 TE Heerlen(NL)**

(72) Inventor: **van Sluijs, Christoffel Pieter**
**Eisenhowerstraat 83**
**NL-6135 AD Sittard(NL)**
Inventor: **Repin, Joannes Fredericus**
**Klingbemden 177**
**NL-6441 KX Brunssum(NL)**
Inventor: **van Asperen, Pieter Jan**
**Op de Windhaspel 9**
**NL-6191 LC Beek (L.)(NL)**
Inventor: **Bruls, Wilhelmus Gerardus Marie**
**Graaf Wolterhoenstraat 32**
**NL-6243 BE Meersen(NL)**

(74) Representative: **Bleukx, Lucas Lodewijk Maria, Ir. et al**
**OCTROOIBUREAU DSM Postbus 9**
**NL-6160 MA Geleen(NL)**

(54) **Polyamide/aromatic polyester composition.**

(57) The invention relates to a process for the preparation of a polyamide/aromatic polyester composition having high temperature resistance and toughness. The composition is obtained by using polytetramethylene adipamide as polyamide and effecting the mixing of the polyamide and the aromatic polyester in the melt in the presence of paratoluene sulphonic acid.

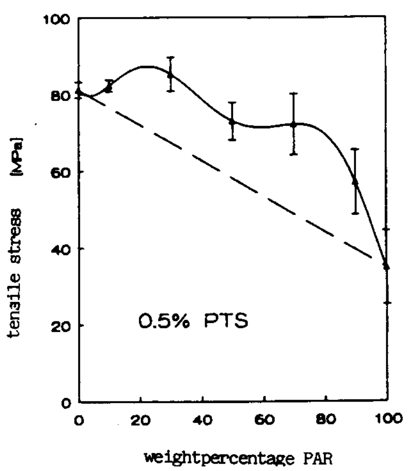


FIG. 4

EP 0 481 558 A1

The invention relates to the preparation of a polyamide/aromatic polyester composition.

Such compositions are known from amongst others EP-A-0227053, WO 88/00220, EP-A-0235384, EP-A-0247357 and DE-A-3216413. Due to the combination of properties of the individual components, these compositions are highly suitable for electronic applications. However due to the anisotropic character of the aromatic polyester, the toughnes or impact resistance of these known compositions are frequently insufficient. Also are in most cases the highest requirements of thermal stability, necessary for flue soldering techniques, not fulfilled.

Another drawback of the known compositions is, that melt-mixing of the composition under optimal conditions, for instance in a twin screw extruder, may result in a homogeneous dispersion, however coalescence easily occurs again in injection moulding, resulting in a less attractive appearance and brittleness of the article.

In order to eliminate the drawback of insufficient toughness a third component is added as impact modifier, for instance in EP-A-0247357, WO 88/00220, EP-A-0227053 and EP-A-0301663. However in many cases the use of an impact modifier has an adverse effect on the rigidity, see for instance EP-A-0247357, in which the heat deflection temperature, HDT, is approximately 20 ° C lowered, due to the presence of the impact modifier.

Object of the present invention is therefore to produce a polyamide/aromatic polyester composition in which said drawbacks are eliminated or significantly reduced.

It has been found now that if polytetramethylene adipamide is chosen as polyamide and the mixing with polyarylate is effected in the melt in the presence of paratoluene sulphonic acid, a polyamide/aromatic polyester composition possessing good toughness and high temperature resistance is obtained.

The process for the preparation of a tough, high temperature resistant polyamide/aromatic polyester composition according to the invention is characterized in that the polyamide substantially consists of tetramethylene adipamide units and the mixing is effected in the melt in the presence of paratoluene sulphonic acid.

By the introduction of polytetramethylene adipamide an exceptionally high temperature resistance is obtained, so that flux soldering at temperatures up to 280 ° C is possible without damage occurring.

Very surprisingly, it has been found now that by effecting the mixing in the melt in the presence of paratoluene sulphonic acid, the toughness of the composition thus obtained remains good also after processing by means of injection moulding.

Mixing in the melt of polyamide 6.6 and, the partial aromatic polyester, polyethylene terephthalate in the presence of paratoluene sulphonic acid is known from L.Z. Pillon and L.A. Utracki, Polymer Process Engineering 4, 375-387 (1986), but the polyamide/polyester composition obtained in this way has a brittle behaviour (see figure 4 of said publication) which does not show any appreciable difference from that of the composition obtained without paratoluene sulphonic acid.

The choice of paratoluene sulphonic acid is otherwise not obvious in fact, as polycondensation products formed under influence of acid in the melt show accelerated chain decomposition by hydrolysis. A decrease in molecular weight negatively affects the mechanical properties of polyamide and polyester. Especially if the composition would have to be processed several times via the melt phase, this could be very serious. Highly surprising, it has been found that this chain decomposition of the polyester only occurs during the first mixing in the melt and is not observed any more in subsequent processing steps, so that the molecular weight remains sufficiently high.

By the polyamide substantially consisting of tetramethylene adipamide units is understood the homopolymer and a copolyamide with tetramethylene adipamide units as the main constituent component. Further, a blend of said homo- or copolyamide with one or more other polyamides is understood by it. The polyamide according to the invention may comprise such a proportion of comonomer units or other polyamides that the characteristic properties of polytetramethylene adipamide are not significantly affected. However, at least 50% of the units must consist of tetramethylene adipamide units, preferably at least 75%, more preferably at least 85%. Application of the homopolymer gives the best results.

Polytetramethylene adipamide, nylon 4.6, can be obtained by polycondensation of tetramethylene diamine and adipic acid. The synthesis of the homopolymer and of copolymers is described for instance in EP-A-0077106, EP-A-0039524, EP-A-0038094, US-A-4868280, US-A-4849498 and EP-A-0360311, which are herewith included by reference. Nylon 4.6 is available on the market as a commercial product. In principle, all polyamides are eligible for a blend with nylon 4.6. A survey of the most currently used polyamides and their synthesis is given in Encyclopedia of Polymer Sciences and Engineering, Vol. II, pp. 315-381, John Wiley & Sons (1988), which is herewith included by reference.

The molecular weight of the polyamide is chosen so high that the mechanical properties are of a sufficient level. The molecular weight expressed as the relative viscosity is at least 2.0, preferably 2.5, measured on a

solution of 1 gram in 100 ml 96% $H_2SO_4$ at 25 ° C.

The aromatic polyesters of the present invention are polyesters and copolyesters, of which the repeating units in the main chain are derived from aromatic compounds. Partially aromatic polyesters of which not all repeating units in the main chain, do not possess an almost completely aromatic character, for instance polyalkylene-tere- or isophthalates, are expressly not part of the present invention. The aromatic polyesters of the present invention are extensively described in Encyclopedia of Polymer Science and Engineering, Index Volume, p. 262-279, John Wiley and Sons, New York (1990), and the literature references given therein. An important group consists of aromatic polyesters with a thermotropic behaviour, which are described in more detail in aforementioned Encyclopedia, Vol. IX, p. 1-61, (1988) and literature references given therein.

For practical reasons thermotropic polyesters are preferred, that are melt processable with polytetramethylene adipamide, i.e. have a melting temperature of at most of about 320 ° C. Several such polyesters are commercially available. However it is also possible to comprise higher melting aromatic polyesters in the composition. In that case preference is given to have these in fibrous form. The interaction of the fibre with the matrix is improved, resulting in improved ductility and stiffness compared to the situation in which no paratoluene sulfonic acid is present.

The molecular weight of the aromatic polyester is chosen such, that the mechanical properties remain at a sufficient level. The molecular weight preferable is at least 10.000, more preferably at least 15.000.
For reasons of processability the molecular weight preferably is at most 50.000, more preferably at most 40.000.

Exceedingly good results are obtained in the case the aromatic polyester is a polyarylate.

Polyarylates are aromatic polyesters derived from a bisphenol and an aromatic dicarboxylic acid, in particular a mixture of terephthalic and isophthalic acid.
The bisphenol has the general formula:

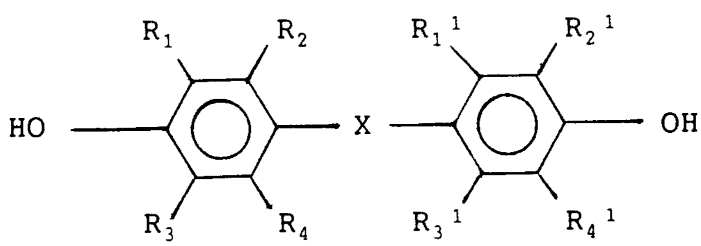

in which
-X- = -O-, -S-, $SO_2$-, -CO-, an alkylene group or an alkylidene group and
$R_{1-4}$ and $R^1{}_{1-4}$ are each chosen from the group comprising H, Cl and alkyl.
Preferably, the bisphenol is 2,2-bis(4-hydroxyphenyl) propane, also identified as bisphenol-A.
The preparation and the properties of polyarylates belong to the state of the art and are described for instance in WO 88/00220 and the references mentioned therein. Polyarylates are available as commercial products under several tradenames.
The polyarylate preferably has a reduced viscosity, approximately between 0.4 and 1.0, measured on a solution of 0.5 gram in 100 ml chloroform at 25 ° C. At a lower viscosity value the mechanical strength is mostly insufficient, while at higher values the melt viscosity is so high that processing problems arise.

The composition according to the invention may further contain the usual additives, for instance stabilizers, fillers, fibre reinforcement, colorants, pigments and flame extinction agents.

In principle there are no special restrictions to the process for mixing the components in the melt. Each conventional method whereby good mixing in the melt phase is achieved is applicable. Suitable equipment is for instance a Brabender mixer, a single-screw extruder or a twin-screw extruder. Preferably, the melt mixing is carried out under a dry inert atmosphere, for instance nitrogen, at a temperature between 300 and 330 ° C. Preferably, the components to be mixed are carefully dried previously.

The substances to be mixed may be supplied to the melt mixing equipment one by one or be previously mixed as finely divided solids and supplied in the form of a mixture. Variants of these modes of supply are also possible. Preferably, the components are supplied to the melt mixing equipment as a dry mixture.

The composition according to the invention is subsequently obtained by cooling of the melt leaving the equipment, preferably in the form of granules, which can be used in processing of the composition to

products, for instance by injection moulding.

The quantity of paratoluene sulphonic acid used in the process according to the invention may vary between 0.05 and 5 wt.% relative to the total weight of polyamide plus aromatic polyester. Preferably, the quantity is 0.1 to 2 wt.%. The optimum quantity of paratoluene sulphonic acid can easily be determined experimentally by one skilled in the art and depends to a high measure on the melt temperature and the residence time in the melt. Too low a quantity may be the cause of insufficient impact strength, while a too high quantity leads to excessive decomposition of polyarylate chains and reduced mechanical properties.

The retention time in the melt is preferably chosen as short as possible. A time between 30 and 300 seconds is sufficient in general.

The ratio polyamide : aromatic polyester can in principle be chosen freely because in all cases improved mechanical properties are obtained with the process according to the invention. The best impact resistance, however, is obtained with a polyamide content higher than about 30 wt.%. In general at least about 10 wt.% polyamide or aromatic polyester in the composition is required to produce a significant effect on the properties.

Preferably, therefore, the composition according to the invention is obtained by mixing in the melt in the presence of paratoluene sulphonic acid of 10-90 parts by wt. polyamide and 90-10 parts by wt. aromatic polyester. More preferably, 30-90 parts by wt. polyamide and 70-10 parts by wt. aromatic polyester are used.

The product obtained by application of the composition according to the invention exhibits a good toughness without loss of rigidity, a reduced moisture absorption and, in relation therewith, dimensional stability and an excellent resistance to short-term exposure to high temperatures, making it particularly suitable for electronic applications. However, other applications requiring a high temperature resistance, low water absorption and a combination of rigidity and toughness are also eligible.

Optionally the granulate obtained after melt-mixing the constituents, or the article obtained by processing the composition, can be given a heat treatment at a temperature of between 180 and 270 °C in an inert atmosphere during 0.5-24 hours.

The invention will now be elucidated by means of the following examples and comparative examples without however being restricted thereto.

Examples and comparative examples

Two series of compositions were prepared, one in the presence of 0.5 wt.% paratoluene sulphonic acid and one without paratoluene sulphonic acid being present.
The starting materials for this, viz.:

a. nylon 4.6, STANYL TW300$^R$, from the firm of DSM (Netherlands), with a relative viscosity of 3.49 (1 g in 100 ml 96% $H_2SO_4$ at 25 °C),

b.1 polyarylate, U-Polymer U-100$^R$, from the firm of Unitika (Japan), a copolyester of bisphenol-A, terephthalic acid and isophthalic acid in a molar ratio of 2 : 1 : 1 and having a number average molecular weight Mn = 22,700,

b.2 aromatic polyester, Vectra A-950 of Hoechst-Celanese, a copolyester of p-hydroxybenzoic acid and 2,6-hydroxynaphthalic acid, having a Mn = about 20.000

and

c. paratoluene sulphonic acid, pro analyse, Fa. Merck were mixed and then carefully dried under vacuum at a temperature of about 100 °C for 24 hours. The dried mixtures were processed on a Brabender twin-screw extruder, L/D 7, diameter 42 mm, at 315 °C and 70 rpm, a retention time of about 1.5 minutes being realized.

The extrudate was directly cooled in a water bath and then granulated. After having been dried again as described above, the granulate was processed to test bars at 310 °C on an Arburg injection moulding machine.

The following characteristics of the granulate and the test bars were determined.

- By means of scanning electron microscopy (SEM) the morphology was made visible.

The following mechanical properties of the test bars were determined.

- E-modulus according to ASTM D790.
- Tensile stress according to ASTM D638.
- Impact resistance according to ASTM D256.

The mechanical measurements were performed on dry as moulded bars and on bars conditioned at 70 °C and RH 62% to constant weight.

The results are shown in the following tables and figures. Table 1 gives the particle size of nylon

4.6/PAR blends after extrusion and after the injection moulding, as derived from the SEM photos.
On account of the excellent degree of dispersion in the extrudate, there seems to be no need to use a mixing agent, however in the processed bars coalescence is apparent.

TABLE 1

| Particle size of PA-4.6/PAR blends after extrusion and after the injection moulding | | | | |
|---|---|---|---|---|
| PAR (%) | PTS (%) | dispers phase | d(extr) (μm) | d (inj. mould.) (μm) |
| 10 | - | PAR | 0.1-0.3 | 0.3-0.5 |
| 30 | - | PAR | 0.2-0.4 | 0.6-1.0 |
| 50 | - | PAR # | 0.6-1.3 | 1.9-3.4 |
| 70 | - | co-cont. | n.a. | n.a. |
| 90 | - | PA-4.6 | 0.1-0.3 | 0.3-0.6 |
| 10 | 0.5 | PAR | 0.1-0.3 | 0.1-0.3 |
| 30 | 0.5 | PAR | 0.3-0.5 | 0.4-0.6 |
| 50 | 0.5 | PAR # | 0.5-1.1 | 0.7-1.5 |
| 70 | 0.5 | co-cont. | n.a. | n.a. |
| 90 | 0.5 | PA-4,6 | 0.1-0.3 | 0.2-0.4 |

# = transition to co-continuous

From the E-modulus measurement results, summarized in Fig.'s 1 and 2 for dry and conditioned, a predictable behaviour and absence of an adverse effect of the paratoluene sulphonic acid (PTS) can be derived.
The tensile stress development is much better for the compositions obtained in the presence of PTS than for those obtained without PTS being present, and also significantly better than would be expected on the basis of the additivity rules (Fig.'s 3 and 4 (dry) and Fig.'s 5 and 6 (conditioned)). The lower absolute value of the fracture tension for 100% PAR has to be attributed to the decline of the molecular weight of PAR because of the presence of PTS in the melt in the extruder.
The impact resistance of the compositions according to the invention is much higher than that of compositions obtained without PTS being present (Fig.'s 7 and 8).
Table 2 shows that the water absorption is not influenced by the process according to the invention.
The excellent resistance against very high temperatures of the products obtained with the compositions according to the invention was demonstrated by submerging a test bar (50 PAR/50 nylon 4.6) for 10 seconds in a bath of molten solder, the temperatures of which were varied between 250 °C and 290 °C with intervals of 10 °C.
The maximum temperature at which no changes were observed yet in the test bar, such as deformation or dissolution, was 280 °C.

TABLE 2: Water absorption of PA-4.6/PAR blends

| % PAR | %PTS | % water |
|---|---|---|
| 0 | - | 2.43 |
| 10 | - | 2.16 |
| 30 | - | 1.67 |
| 50 | - | 1.24 |
| 70 | - | 0.87 |
| 90 | - | 0.58 |
| 100 | - | 0.26 |
| 0 | 0.5 | 2.38 |
| 10 | 0.5 | 2.15 |
| 30 | 0.5 | 1.72 |
| 50 | 0.5 | 1.32 |
| 70 | 0.5 | 0.77 |
| 90 | 0.5 | 0.50 |
| 100 | 0.5 | 0.31 |

In figure 9 and 10 the effect of PTS-addition on E-modulus and tensile stress is shown, (dry as moulded), for Vectra 950/nylon 4.6-compositions.

**Claims**

1. Process for the preparation of an impact resistant, high temperature resistant thermoplastic polyamide/aromatic polyester composition for electronic applications by mixing in the melt of a composition containing polyamide and aromatic polyester, characterized in that the polyamide substantially consists of tetramethylene adipamide units and the mixing is effected in the melt in the presence of paratoluene sulphonic acid.

2. Process according to claim 1, characterized in that the composition contains
   10 to 90 wt.% aromatic polyester (a)
   90 to 10 wt.% polyamide (b)
   and per 100 parts by wt. of (a) + (b)
   0.01-5 parts by wt. paratoluene sulphonic acid (c).

3. Process according to claim 2, characterized in that the composition contains
   10 to 70 wt.% aromatic polyester and
   90 to 30 wt.% polyamide.

4. Process according to any of the conclusions 1-3, characterized in that the aromatic polyester is a polyarylate.

5. Process according to claim 4, characterized in that the polyarylate is chosen from the group obtained from a bisphenol having the general formula (I)

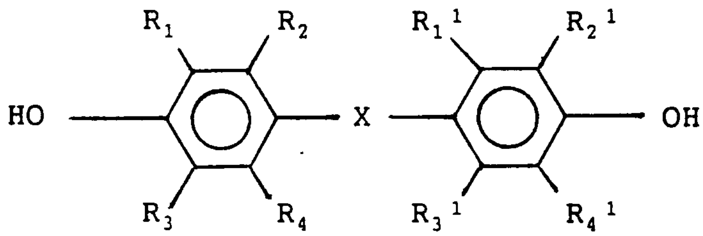

in which
-X- = -O-, -S-, $-SO_2-$, -CO-, an alkylene group or an alkylidene group and
$R_{1-4}$ and $R^1_{1-4}$ are each chosen from the group comprising H, Cl and hydrocarbon, and a terephthalic acid and/or isophthalic acid or a functional derivative thereof.

**6.** Process according to claim 5, characterized in that the bisphenol is bisphenol-A.

**7.** Process according to claim 1, characterized in that the mixing in the melt takes place in 30 to 300 seconds.

**8.** Process according to claim 1, characterized in that the mixing takes place at a temperature between 300 and 330 °C.

**9.** Process according to any one of the claims 1-8, characterized in that the mixing takes place in an extruder.

**10.** Melt-mixed composition of
(a) a substantially of tetramethylene adipamide units consisting polyamide
(b) an aromatic polyester
(c) paratoluene sulfonic acid.

**11.** Composition of claim 10, characterized in that it comprises
10-90 % wt. (a)
90-10 % wt. (b)
and per 100 parts by weight of (a) + (b)
0.01-5 parts by weight paratoluene sulfonic acid (c).

**12.** Composition according to claim 10 or 11, characterized in that the aromatic polyester is a polyarylate.

**13.** Composition according to claim 12, characterized in that the polyarylate is derived from bisfenol A.

**14.** Product obtained by application of the composition according to claim 10.

**15.** Process for the preparation of a polyamide/aromatic polyester composition as substantially described in the specification and the examples.

**16.** Composition obtained by the process according to claim 15.

**17.** Product obtained by application of the composition according to claim 16.

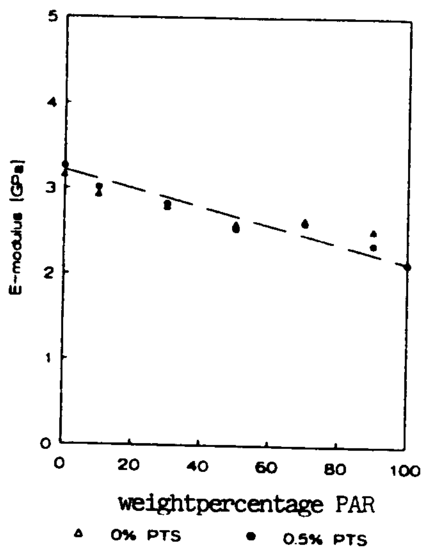


FIG. 1

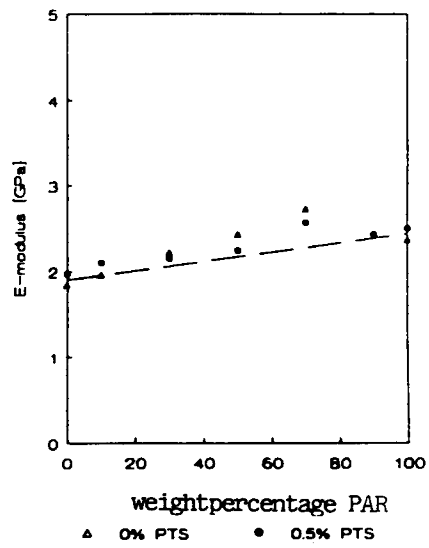


FIG. 2

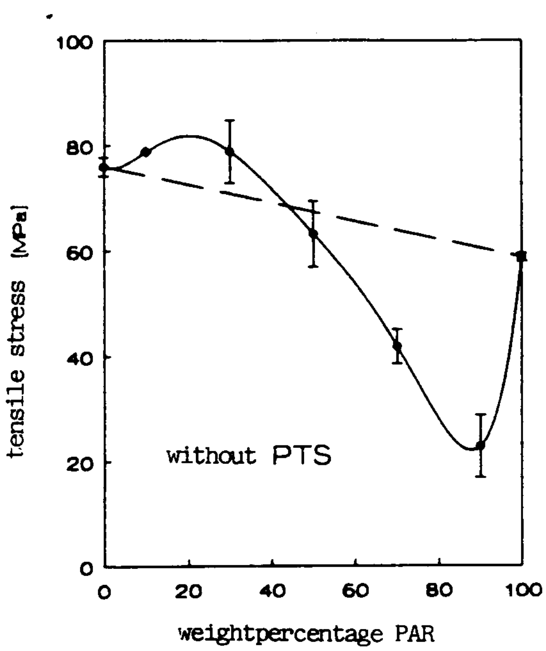


FIG. 3

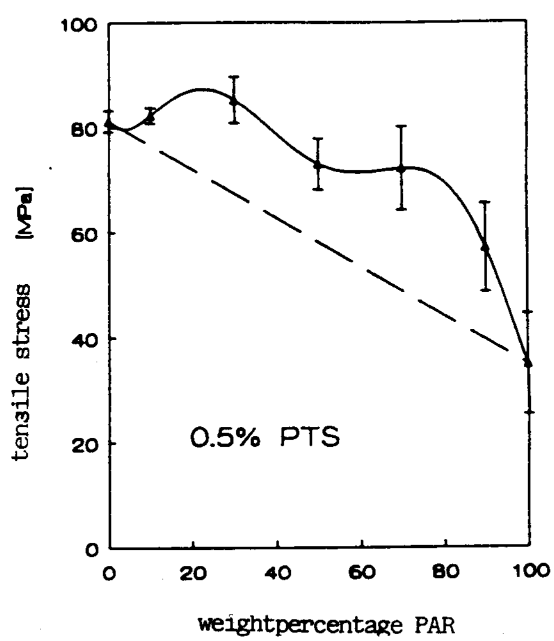


FIG. 4

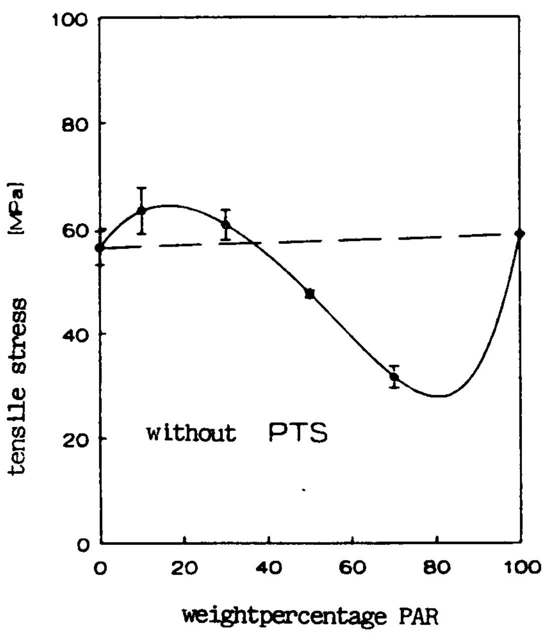


FIG. 5

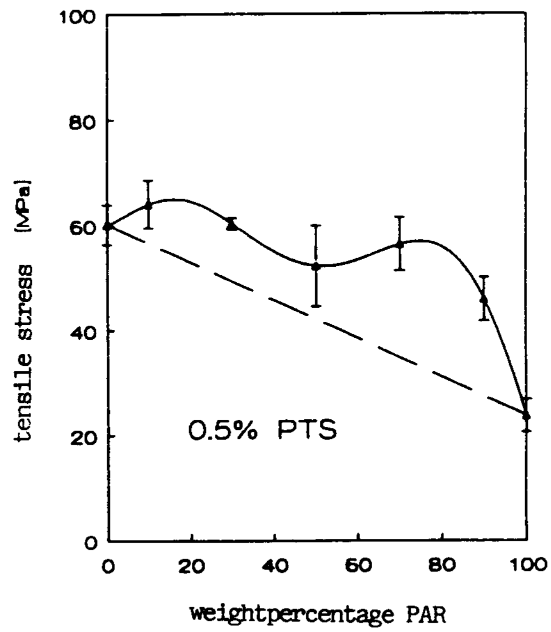


FIG. 6

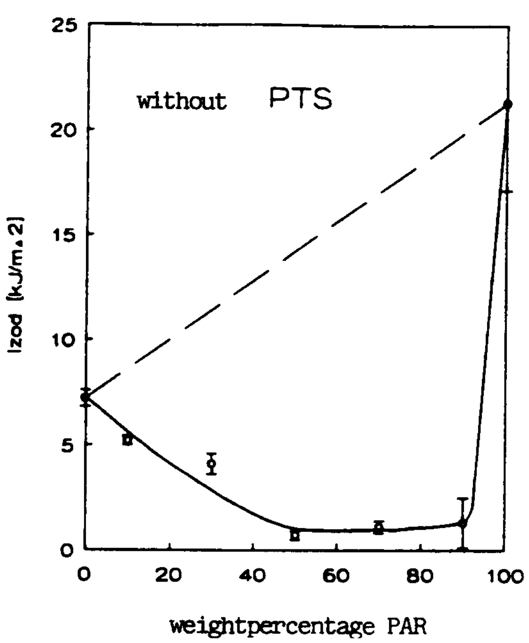


FIG. 7

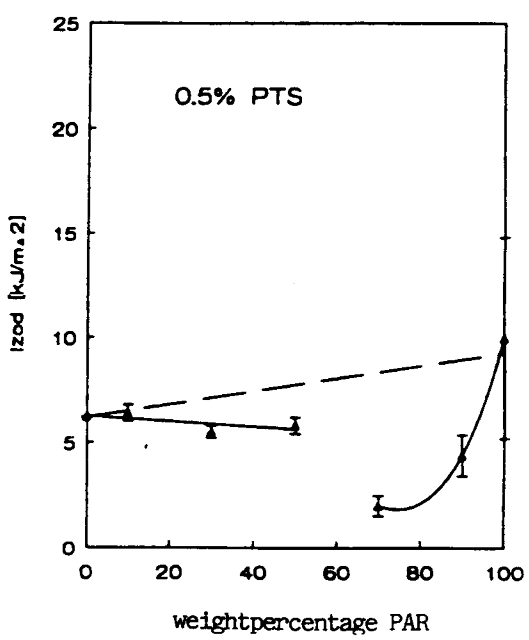


FIG. 8

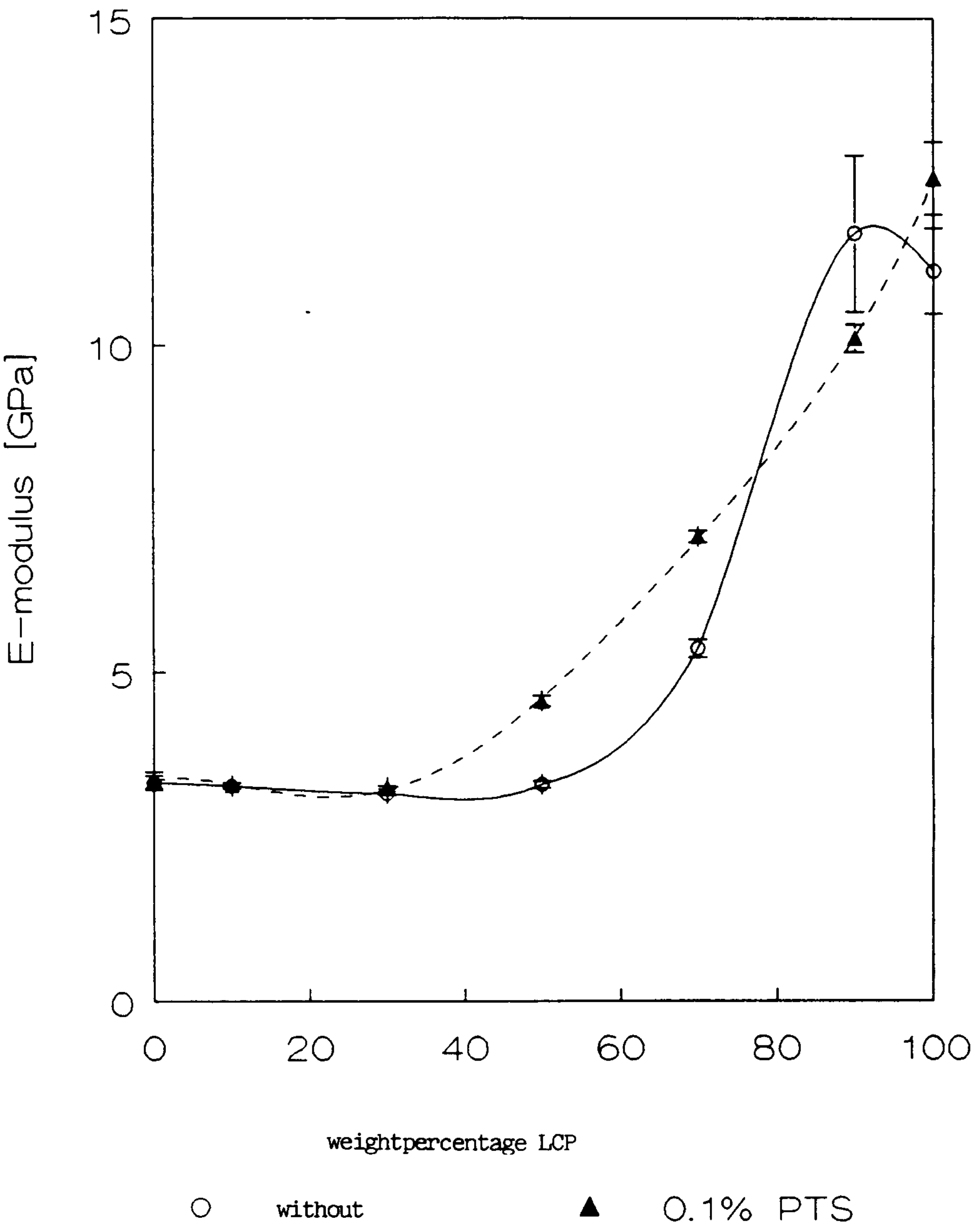
15
10
5
0
E-modulus [GPa]
0
20
40
60
80
100
weightpercentage LCP
○ without
▲ 0.1% PTS

FIG. 9

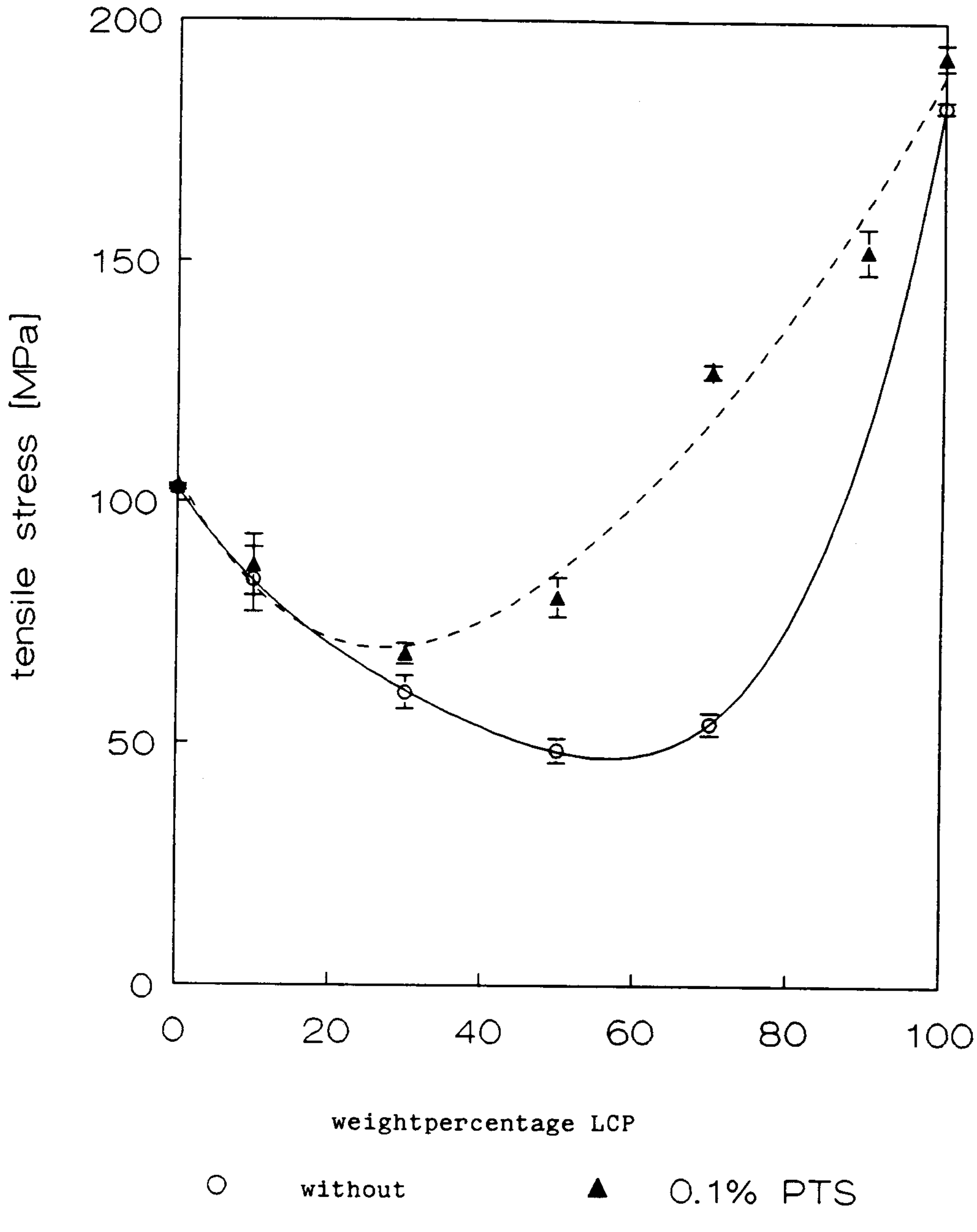
200
150
100
50
0
tensile stress [MPa]
0
20
40
60
80
100
weightpercentage LCP
without
0.1% PTS

FIG. 10

European Patent Office

# EUROPEAN SEARCH REPORT

Application Number

**EP 91 20 2633**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | PATENT ABSTRACTS OF JAPAN, vol. 14, no. 497 (C-0774), 30th October 1990; & JP-A-02 206 650 (UNITIKA LTD) 16-08-1990 * Abstract * | 1-17 | C 08 L 77/06<br>C 08 L 67/03<br>C 08 K 5/42 //<br>(C 08 L 77/02<br>C 08 L 67:03 )<br>(C 08 L 67/03<br>C 08 L 77:02 )<br>(C 08 K 5/42<br>C 08 L 67:03<br>C 08 L 77:02 ) |
| D,Y | CHEMICAL ABSTRACTS, vol. 105, no. 20, 17th November 1986, pages 34-35, abstract no. 173536u, Columbus, Ohio, US; L.Z. PILLON et al.: "A study of the ester-amide interchange reaction in the poly(ethylene terephthalate)/poly(amide-6,6) system", & POLYM. PROCESS. ENG. 1986, 3(2-4), 375-87 | 1-17 | |
| Y | CHEMICAL ABSTRACTS, vol. 107, no. 18, 2nd November 1987, page 26, abstract no. 155115t, Columbus, Ohio, US; L.Z. PILLON et al.: "On the crystallinity and some structure/property relationships of poly(ethylene terephthalate)-polyamide-6,6 blends", & POLYM. ENG. SCI. 1987, 27(13), 984-9 | 1-17 | |
| | | | TECHNICAL FIELDS SEARCHED (Int. Cl.5) |
| | | | C 08 L<br>C 08 K |

The present search report has been drawn up for all claims

| Place of search | Date of completion of search | Examiner |
|---|---|---|
| The Hague | 18 November 91 | LEROY ALAIN |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document